# EUROPÄISCHE PATENTSCHRIFT

(11) **EP 3 545 213 B1**
(45) Veröffentlichungstag und Bekanntmachung des Hinweises auf die Patenterteilung: **13.10.2021**
(21) Anmeldenummer: 17797067.0
(22) Anmeldetag: 23.10.2017
(51) Int. Cl.: F16H 61/28, F16H 61/36, F16H 63/34, F16H 63/48

(54) **SICHERUNGSEINHEIT ZUR EINSTELLUNG EINER VORBESTIMMTEN POSITION EINER KOMPONENTE EINES GETRIEBES**
SECURING UNIT FOR SETTING A PREDEFINED POSITION OF A COMPONENT OF A TRANSMISSION
UNITÉ DE BLOCAGE PERMETTANT DE RÉGLER UNE POSITION PRÉDÉFINIE D'UN ÉLÉMENT D'UNE TRANSMISSION

(30) Priorität: 28.11.2016 DE 102016223551
(43) Veröffentlichungstag der Anmeldung: 02.10.2019
(73) Patentinhaber: ZF Friedrichshafen AG, 88046 Friedrichshafen (DE)
(72) Erfinder: ROSENTRETER, Sascha, 32339 Espelkamp (DE); GIEFER, Andreas, 49448 Lemförde (DE)
(74) Vertreter: ZF Friedrichshafen AG
(86) Internationale Anmeldenummer: PCT/EP2017/076953
(87) Internationale Veröffentlichungsnummer: WO 2018/095666

(56) Entgegenhaltungen:
- DE-A1- 4 447 512
- DE-A1- 10 054 977
- DE-A1-102014 219 037

## Beschreibung

Die vorliegende Erfindung bezieht sich auf eine Sicherungseinheit zur Einstellung einer vorbestimmten Position eines Getriebes gemäß dem Anspruch 1.

In modernen Fahrzeugen werden oftmals Automatikgetriebe verwendet, welche die Gangwahl für den Fahrer des Fahrzeugs deutlich erleichtern. Problematisch ist allerdings, dass in bestimmten Situationen sichergestellt werden soll, dass beispielsweise die Parkbremse tatsächlich eingelegt wird, auch der Fahrer des Fahrzeugs dies, möglicherweise aus Vergesslichkeit, nicht vornimmt. Hierdurch soll eine deutlcihe Erhöhung der Fahrzeugsicherheit erreicht werden, wobei zur Erreichung dieses erhöhten Sicherheitsniveaus möglichst keine aufwändigen Konstruktionen vorzunehmen sind.

Sicherungseinheiten sind aus dem Stand der Technik, z.B. aus der DE10054977 A1 oder der DE102014219037 A1 bekannt. Vor diesem Hintergrund schafft die vorliegende Erfindung eine verbesserte Sicherungseinheit zur Einstellung einer vorbestimmten Position eines Getriebes. Vorteilhafte Ausgestaltungen ergeben sich aus den Unteransprüchen und der nachfolgenden Beschreibung.

Der hier vorgestellte Ansatzs schafft eine Sicherungseinheit zur Einstellung einer vorbestimmten Position einer Komponente eines Getriebes, wobei die Sicherungseinheit die folgenden Merkmale aufweist:
- eine Stelleinheit, die mit einem Übertragungselement zur Einstellung der vorbestimmten Position der Komponente des Getriebes gekoppelt oder koppelbar ist;
- eine Stützeinheit, die in eine Bewegungsrichtung beweglich zur Stelleinheit anordenbar oder angeordnet ist und mit der Stelleinheit über eine Feder verbunden ist;
- eine Auslöseeinheit mit einer Kniehebeleinheit, wobei die Kniehebeleinheit zwischen die Stelleinheit und die Stützeinheit gekoppelt ist; und
- eine Fixiereinheit mit einem Elektromagneten, wobei die Fixiereinheit ausgebildet ist, um die Kniehebeleinheit in einem bestromten Zustand des Elektromagneten in einer Fixierposition zu halten und hierdurch die Stelleinheit in Bezug zur Stützeinheit zu fixieren und wobei die Fixiereinheit ferner ausgebildet ist, um die Kniehebeleinheit in einem unbestromten Zustand des Elektromagneten zur Bewegung in eine Freigabeposition freizugeben, um und hierdurch das Verbringen der Komponente des Getriebes in die vorbestimmte Position freizugeben.

Unter einer Stelleinheit (die synonym auch als Stellelement bezeichnet werden kann) kann beispielsweise eine Einheit verstanden werden, die eine Zugkraft oder eine Schubkraft auf das Übertragungselement ausübt, um eine Komponente des Getriebes in die vorbestimmte Position zu bringen. Bei dem Übertragungselement kann es sich beispielsweise um einen Seilzug handeln. Bei der Komponente des Getriebes kann es sich beispielsweise um eine Parksperre (bzw. eine Parksperrklinke) oder eine Parksperreneinheit des Getriebes handeln, welche ein Wegrollen des Fahrzeugs bei einem abgestellten Fahrzeug verhindern soll. Bei der vorbestimmten Position der Komponente des Getriebes kann es sich beispielsweise um eine eingerastete Position der Parksperrklinke Zahnräder des Getriebes handeln, also um die Aktivierung oder eine eingelegte Position der Parksperre oder der Parksperreinheit. Unter einer Stützeinheit (die synonym auch als Stützelement bezeichnet werden kann) kann beispielsweise ein bewegliches Element der Sicherungseinheit verstanden werden, welches mittels einer Feder gegen die Stelleinheit abgestützt ist und zum Spannen eines Sicherungsmechanismus ausgebildet ist, um ein Verbringen kann der Stelleinheit in die Position zu ermöglichen, in der die Stelleinheit die Komponente des Getriebes in die vorbestimmte Position verbringt, wenn der Elektromagnet nicht bestromt ist. Unter einer Bewegungsrichtung kann eine Richtung verstanden werden, die innerhalb eines Toleranzbereichs von beispielsweise zehn Prozent dem möglichen Bewegungs- oder Verfahrweg der Stützeinheit bezüglich der Stelleinheit entspricht. Unter einer Auslöseeinheit kann eine Vorrichtung oder ein Mechanismus verstanden werden, der bistabil in zwei unterschiedlichen Lagen gehalten werden kann. Insbesondere kann durch die Kniehebeleinheit der Auslöseeinheit sichergestellt sein, dass die Stelleinheit und die Stützeinheit in der Fixierposition gegeneinander fixiert, d.h., unbeweglich zueinander gehalten werden, wogegen in der Freigabeposition die Stelleinheit beispielsweise beweglich gegenüber der Stützeinheit gehalten werden kann und zugleich in der Freigabeposition die Stellseinheit in der Lage ist, die Komponente des Getriebes in die vorbestimmte (Sicherheits-) Position zu bringen. Die Fixiereinheit kann hierbei ausgebildet sein, um durch ein Bestromen des Elektromagneten die Kniehebeleinheit in die Fixierposition zu bringen oder in einer solchen Position zu halten. Die Kniehebeleinheit der Auslöseeinheit kann beispielsweise zumindest zwei miteinander verbundene Hebelelemente aufweisen, von denen ein erstes der Hebelelemenete mit der Stelleinheit und ein zweites der Hebelelemente mit der Stelleinheit verbunden ist.

Der hier vorgestellte Ansatz basiert auf der Erkenntnis, dass in einem Notfall des Fahrzeugs oder bei einer Außerbetriebnahme des Fahrzeugs der Elektromagnet ausgeschaltet werden kann und hierdurch die Kniehebeleinheit in die Freigabeposition verbracht werden kann, sodass auch in diesen Fällen sicher die vorbestimmte Position der Komponente des Getriebes erreicht werden kann. Insbesondere unter Vermittlung der Feder kann in diesem Fall bei ausgeschaltetem Elektromagneten die Fixiereinheit bzw. die Kniehebeleinheit von der Fixierposition in die Freigabeposition verbracht werden, sodass das Stellelement in eine gewünschte Lage verschoben wird, die der vorbestimmten Position der Komponente des Getriebes entspricht. Der hier vorgeschlagene Ansatz bietet den Vorteil mit technisch sehr einfachen Mitteln und dennoch einer kompakten Bauweise eine Sicherheitseinheit zu schaffen, die auch in Notlagen zuverlässig das Erreichen der vorbestimmten Position der Komponente des Getriebes ermöglicht, um hierdurch eine zusätzliche Sicherheitsfunktion zu gewährleisten.

Besonders vorteilhaft ist eine Ausführungsform des hier vorgestellten Ansatzes, bei der die Kniehebeleinheit zumindest ein Hebelelement aufweist, das in der Fixierposition in eine Richtung ausgerichtet ist, die im Wesentlichen die Bewegungsrichtung zwischen der Stützeinheit und der Stelleinheit entspricht. Beispielsweise weist die Richtung des Hebelelementes, innerhalb eines Toleranzbereichs von zehn Prozent von der Bewegungsrichtung zwischen der Stützeinheit und der Stelleinheit auf. Eine solche Ausführungsform des hier vorgeschlagenen Ansatzes bietet den Vorteil einer sehr sicheren und stabilen Kopplung des Stellelements mit dem Stützelement, da die Kraftwirkung zwischen dem Stützelement und dem Stellelement im Wesentlichen in Längsstreckungsrichtung dieses Hebelelements ausgeübt wird. Zugleich bietet eine solche Ausführungsform den Vorteil, sehr Bauraum-sparend ausführbar zu sein.

Günstig ist weiterhin eine Ausführungsform des hier vorgestellten Ansatzes, bei der die Kniehebeleinheit in der Fixierposition und/oder der Freigabeposition an einem Anschlagelement der Stelleinheit anliegt. Eine solche Ausführungsform des hier vorgeschlagenen Ansatzes bietet den Vorteil, die Kniehebeleinheit zuverlässig und schnell in die Fixierposition und/oder die Freigabeposition zu verbringen, ohne dass hierfür aufwändige bauliche Maßnahmen erforderlich wären.

Gemäß einer weiteren Ausführungsform des hier vorgeschlagenen Ansatzes kann die Fixiereinheit ausgebildet sein, um in der Freigabeposition eine Bewegung der Stelleinheit relativ zur Stützeinheit freizugeben. Hierdurch wird vorteilhaft ermöglicht, dass in der Freigabeposition unter Vermittlung der Feder die Stelleinheit in die vorstehend genannte gewünschte Lage verbracht werden kann, um hierdurch die vorbestimmte Position der Komponente des Getriebes zu erreichen. Insbesondere bei einem Ausschalten des Elektromagneten kann somit zuverlässig erreicht werden, dass diese Komponente des Getriebes in die vorbestimmte Position verbracht wird.

Sehr klein und kompakt kann eine Sicherungseinheit gemäß einer weiteren Ausführungsform des hier vorgeschlagenen Ansatzes hergestellt werden, wenn die Kniehebeleinheit und/oder die Fixiereinheit das Stellelement klammerförmig oder U-förmig umgibt. Insbesondere bietet eine solche Ausführungsform die Möglichkeit, auf die Stelleinheit an zwei gegenüberliegenden Seiten mittels der Kniehebeleinheit und/oder der Fixiereinheit Kräfte auszuüben, sodass durch diese Kraftausübung an mehreren Angriffspunkten der Stelleinheit die entsprechenden Abschnitte der Kniehebeleinheit und/oder der Fixiereinheit kleiner und dennoch ausreichend stabil zum Erreichen der gewünschten Funktionsfähigkeit ausgeführt werden können.

Von besonderem Vorteil ist eine Ausführungsform des hier vorgeschlagenen Ansatzes, bei der die Fixiereinheit ausgebildet ist, um zum Erreichen der Fixierposition im Wesentlichen senkrecht zu der Bewegungsrichtung zwischen der Stelleinheit und der Stützeinheit bewegt zu werden. Eine solche Ausführungsform des hier vorgeschlagenen Ansatzes bietet den Vorteil einer ebenfalls sehr kompakten Bauform der Sicherungseinheit bei Vermeidung von Überschneidungen von Bewegungswegen der einzelnen Komponenten oder Elementen der Sicherungseinheit.

Weiterhin kann gemäß einer anderen Ausführungsform des hier vorgeschlagenen Ansatzes der Elektromagnet der Fixiereinheit ausgebildet sein, um eine magnetische Kraft auf eine Aufnahmeplatte auszuüben, die an einem Verbindungselement angeordnet ist, welches zwei gegenüberliegenden Seiten der Stelleinheit verbindenden Teilabschnitte der Fixiereinheit verbindet. Eine solche Ausführungsform des hier vorgeschlagenen Ansatzes bietet den Vorteil, erforderliche Komponenten der Fixiereinheit sehr effizient für mehrere Zwecke zu nutzen. Insbesondere durch das Vorsehen der Aufnahmeplatte am Verbindungselement können die beiden an zwei gegenüberliegenden Seiten der Stelleinheit verbindenden Teilabschnitte der Fixiereinheit einerseits verbunden werden und andererseits ein Angriffspunkt für den Elektromagneten geschaffen werden.

Um dennoch im normalen Betriebsmodus der Sicherungseinheit, also außerhalb des Notfallbetriebs, eine zuverlässige Übertragung eines Gangwahlwunsches des Fahrers vom Getriebewählschalter auf das Getriebe zu ermöglichen, kann gemäß einer Ausführungsform des hier vorgeschlagenen Ansatzes die Fixiereinheit zumindest eine Nut aufweisen, in die ein Zapfen der Kniehebeleinheit hineinragt. Durch die Nut, in die der Zapfen der Kniehebeleinheit hineinragt und in der der Zapfen gleiten kann, lässt sich nun auch bei eingeschaltetem Elektromagneten eine Bewegung der mit der Stützeinheit gekoppelten Stelleinheit in der Fixierposition erreichen, wodurch ein "Normalbetrieb" des Gangwahlschalters bzw. eine hierdurch bewirkte Veränderung der Lage von Komponenten des Getriebes zueinandnder sichergestellt werden kann.

Besonders vorteilhaft ist eine Ausführungsform des hier vorgestellten Ansatzes, bei der eine Haupterstreckungsrichtung der Nut der Fixiereinheit innerhalb eines Toleranzbereichs von der Bewegungsrichtung zwischen dem Stellelement und dem Stützelement abweicht. Beispielsweise kann diese Haupterstreckungsebene Richtung der Nut der Fixiereinheit um maximal zehn Grad von der Bewegungsrichtung zwischen dem Stellelement und dem Stützelement abweichen. Auf diese Weise kann vorteilhaft erreicht werden, dass durch die Wirkung der Federkraft der Feder, die am Stützelement abgestützt ist, die Fixiereinheit bzw. die Kniehebeleinheit in die Freigabeposition verbracht werden kann, sodass das Stellelement durch die Feder in die gewünschte Lage geschoben werden kann, um die vorbestimmte Lage oder Position der Komponente des Getriebes zu erreichen. Zugleich kann dennoch sichergestellt werden, dass auch im Normalbetrieb der Sicherungseinheit der Zapfen ohne größere Reibungsverluste in der Nut entlanggleiten kann.

Gemäß einer weiteren Ausführungsform des hier vorgeschlagenen Ansatzes kann ein dem Stützelement in Bezug auf das Stellelement gegenüberliegendes Anschlagelement vorgesehen sein, an dem das Stellelement abgestützt ist, wenn die Komponente des Getriebes sich in der vorbestimmten Position befindet. Eine solche Ausführungsform des hier vorgeschlagenen Ansatzes bietet den Vorteil, das Stellelement in eine definierte Position verbringen zu können, wenn die vorbestimmte Position der Komponente des Getriebes erreicht ist bzw. erreicht werden soll. Zugleich bietet ein solches Anschlagelement den Vorteil, ein definiertes Widerlager vorzusehen, welches zum Spannen der Sicherungseinheit, also beim Bewegen des Stützelementes auf das Stellelement hin zur Spannung der Feder verwendet werden kann.

Besonders vorteilhaft ist eine Ausführungsform des hier vorgeschlagenen Ansatzes, bei der eine Antriebseinheit vorgesehen ist, die ausgebildet ist, um das Stützelement in die Bewegungsrichtung zu bewegen, insbesondere wobei die Antriebseinheit ausgebildet ist, um das Stützelement linear zu bewegen. Eine solche Antriebseinheit kann beispielsweise ein Elektromotor, optional verbunden mit einem kleinen Getriebe, sein, um das Stützelement aktiv zu bewegen. Hierdurch kann zur Funktionalität des hier vorgeschlagenen Ansatzes in einer kleinen Baugruppe ein Spannen der Feder sehr einfach implementiert werden.

Um sicherzustellen, dass auch in einem Notbetrieb ein Fahrzeug weggerollt werden kann, kann gemäß einer weiteren Ausführungsform des hier vorgeschlagenen Ansatzes eine Notentriegelungseinheit vorgesehen sein, die ausgebildet ist, um eine durch die Stelleinheit und die Stützeinheit hindurchragende Achse in die Bewegungsrichtung zu bewegen, wobei die Achse an dem Übertragungselement fixiert ist, insbesondere wobei die Notentriegelungseinheit ein Seilzugeinheit und/oder als Hebeleinheit aufweist, die auf einer der Stützeinheit in Bezug auf das Stellelement gegenüberliegenden Seite angeordnet ist. An dieser Achse ist beispielsweise das Übertragungselement, beispielsweise ein Seil fixiert, welches an einer anderen Stelle mit dem Getriebe oder der Komponente des Getriebes ebenfalls fixiert ist. Durch die Notentriegelungseinheit kann auch sichergestellt werden, dass sowohl in der Fixierposition als auch in der Freigabeposition der Kniehebeleinheit bzw. der Fixiereinheit eine Bewegung des Fahrzeugs ermöglicht wird. Beispielsweise kann hierzu die Notentriegelungseinheit mittels einer Aktivierungsseilzugeinheit betrieben oder aktiviert werden, die manuell von einem Pannen- oder Reparaturdienst oder dergleichen betätigt werden kann.

Von Vorteil ist ferner auch ein Verfahren zum Betrieb einer Sicherungseinheit gemäß einer hier vorgestellten Variante. Das Verfahren, das nicht Bestandteil der Erfindung ist, weist folgenden Schritte auf: Bewegen des Stützelementes und des Stellelementes aufeinander zu, um die Feder zu spannen; und
Verbringen oder Halten der Fixiereinheit in der Fixierposition durch Bestromen des Elektromagneten.

Auch durch eine solche Ausführungsform des hier vorgeschlagenen Ansatzes können die vorstehend genannten Vorteile effizient erreicht werden.

Denkbar ist auch eine Ausführungsform des hier vorgestellten Ansatzes, bei dem ein Steuergerät vorgesehen ist, welches eingerichtet ist, um Schritte einer hier genannten Variante des Verfahrens in entsprechenden Einheiten auszuführen und/oder anzusteuern. Auch eine solche Ausführungsform des hier vorgestellten Ansatzes in der Form eines Steuergeräts bietet eine effiziente und technisch einfach umzusetzende Möglichkeit, die vorstehend genannten Vorteile zu realisieren.

Ein Steuergerät kann ein elektrisches Gerät sein, das elektrische Signale, beispielsweise Sensorsignale verarbeitet und in Abhängigkeit davon Steuersignale ausgibt.

Das Steuergerät kann eine oder mehrere geeignete Schnittstelle aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung oder Ansteuerung von Schritten des Verfahrens nach einer der vorstehend beschriebenen Ausführungsformen verwendet wird, wenn das Programm auf einem Computer oder einem Steuergerät ausgeführt wird.

Günstige Ausführungsbeispiele des hier vorgestellten Ansatzes werden nachfolgend mit Bezug auf die beigefügten Figuren näher erläutert. Hierbei zeigt
Fig. 1 eine schematische Darstellung eines Fahrzeugs mit einer Sicherungseinheit gemäß einem Ausführungsbeispiel des hier vorgestellten Ansatzes;
Fig. 2 eine perspektivische Ansicht eines Ausführungsbeispiels der Sicherungseinheit;
Fig. 3 die Sicherungseinheit gemäß einem Ausführungsbeispiel des hier vorgestellten Ansatzes in perspektivischer Ansicht;
Fig. 4 eine weitere perspektivische Ansicht der Sicherungseinheit;
Fig. 5 eine weitere perspektivische Ansicht auf die Sicherungseinheit;
Fig. 6 eine perspektivische Ansicht eines Ausführungsbeispiels der Sicherungseinheit;
Fig. 7 eine perspektivische Darstellung eines Ausführungsbeispiels der Sicherungseinheit;
Fig. 8 eine perspektivische Darstellung einer Sicherungseinheit;
Fig. 9 eine Draufsichtsdarstellung auf ein Ausführungsbeispiel des hier vorgestellten Ansatzes einer Sicherungseinheit;
Fig. 10 eine Draufsichtsdarstellung auf einem Ausführungsbeispiel des hier vorgestellten Ansatzes einer Sicherungseinheit;
Fig. 11 eine Querschnittsdarstellung durch eine Sicherungseinheit gemäß einem Ausführungsbeispiel des hier vorgeschlagenen Ansatzes im nicht gespannten Zustand;
Fig. 12 eine Querschnittsdarstellung durch eine Sicherungseinheit gemäß einem Ausführungsbeispiel des hier vorgeschlagenen Ansatzes im gespannten Zustand;
Fig. 13 ein Blockschaltbild eines Steuergeräts zum Ansteuern eines nicht erfindungsgemäßen Verfahrens zum Betrieb einer Sicherungseinheit gemäß einer hier vorgestellten Variante; und
Fig. 14 ein Ablaufdiagramm eines nicht erfindungsgemäßen Verfahrens zum Betrieb einer Sicherungseinheit.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

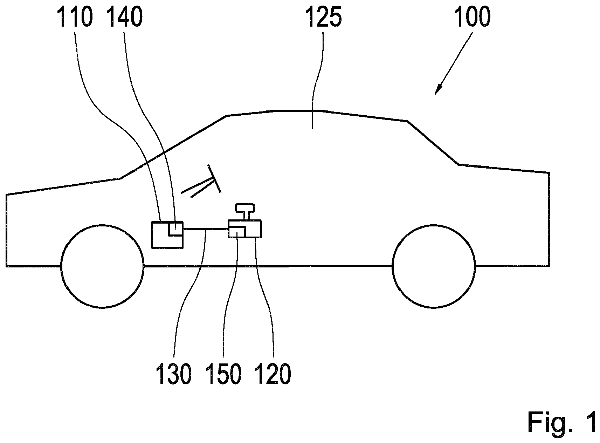

Figur 1 zeigt eine schematische Darstellung eines Fahrzeugs 100, in dem ein Getriebe 110 angeordnet ist, welches beispielsweise von einem Getriebewahlschalter 120 aus dem Fahrgastraum 125 heraus betätigt werden kann. Dabei kann beispielsweise eine Stellung des Getriebewahlschalters 120 über einen Seilzug als Übertragungselement 130 an das Getriebe 110 übertragen werden, wobei einzelne Komponenten 140 des Getriebes, wie beispielsweise eine Parksperre oder eine Parksperreinheit in eine bestimmte Position gebracht werden und somit eine bestimmte Funktionalität des Getriebes 100 sicherstellen. Beispielsweise kann im Falle einer Parksperre als aktivierter Komponente 140 das Getriebe 110 blockiert werden, sodass das Fahrzeug 100 gegen ein (beispielsweise unbeabsichtigtes) Wegrollen gesichert ist.

Wird nun jedoch beispielsweise von einem in der Figur 1 nicht dargestellten Fahrer vergessen, beim Abstellen des Fahrzeugs 100 den Getriebewahlschalter 120 auf die Position "Parksperre" oder "Parken" schalten, wird die entsprechende Komponente 140 des Getriebes 100, hier also die Parksperreinheit, nicht aktiviert, sodass es zu dem zu vermeidenden Wegrollen des Fahrzeugs 100 kommen könnte, soweit keine anderweitigen Sicherheitsmaßnahmen ergriffen werden.

An dieser Stelle setzt der hier vorgeschlagenen Ansatz an, in dem eine Sicherungseinheit 150 vorgestellt wird, durch welche eine bestimmte Komponente 140 des Getriebes 110 in eine vorbestimmte Position gebracht wird und hierdurch beispielsweise das zuverlässige Einlegen oder Aktivieren der Parksperreinheit ermöglicht wird, auch wenn ein Fahrer des Fahrzeugs 100 dies möglicherweise beim Verlassen des Fahrzeugs irrtümlich vergessen hat. Die Sicherungseinheit 150 kann beispielsweise im Getriebewahlschalters 120 selbst (wie dies in der Figur 1 dargestellt ist) oder an einer anderen Stelle im Fahrzeug 100 verbaut sein und die Komponente 140 des Getriebes 100 mittels des Übertragungselementes 130, wie beispielsweise dem Seilzug, zwischen dem Getriebewahlschalters 120 und dem Getriebe 100 in diese vorbestimmte Position zu bringen. Denkbar ist jedoch auch ein Übertragungselement 130, welches ausschließlich eine Verbindung zwischen der Sicherungseinheit 150 und der betreffenden Komponente 140 des Getriebes 110 sicherstellt, ohne dass über dieses Übertragungselement 130 noch weitere Schaltungsfunktionen wie beispielsweise die Wahl eines Vorwärtsgangs oder Rückwärtsgangs übertragen werden. Ein solches Ausführungsbeispiel unter Verwendung eines exklusiven Übertragungselementes zwischen der Sicherungseinheit 150 und der Komponente 140 des Getriebes 110 würde zwar als zusätzliches Element des Getriebesystems erhöhte Kosten verursachen, jedoch könnte die zuverlässige Funktion der Sicherungseinheit mit einer höheren Sicherheit gewährleistet werden.

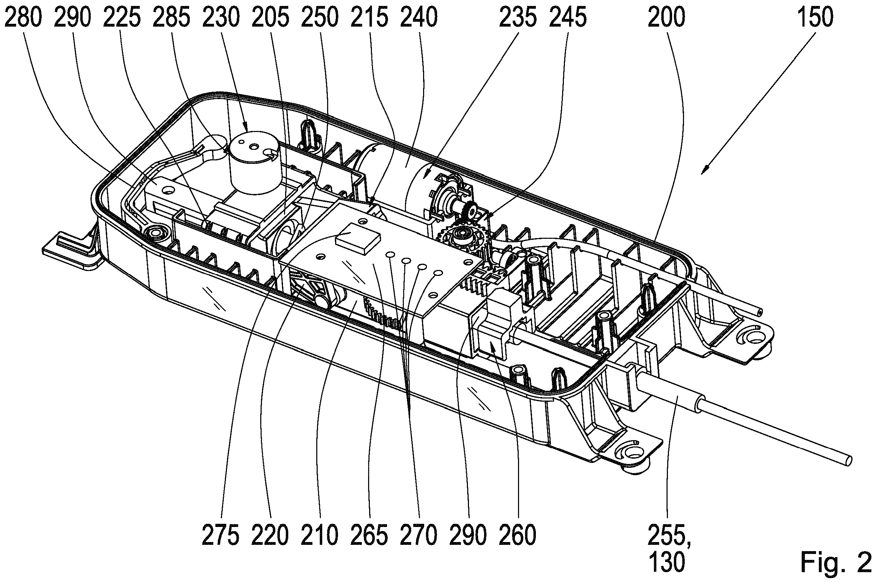

Figur 2 zeigt eine perspektivische Ansicht eines Ausführungsbeispiels der Sicherungseinheit 150 gemäß dem hier vorgestellten Ansatz. Hierbei ist die Sicherungseinheit 150 in einem Gehäuse 200 angeordnet, deren Deckel in der Figur 2 nicht dargestellt ist und deren Wände ferner in der Figur 2 zur besseren Übersichtlichkeit transparent dargestellt sind. Die Sicherungseinheit 150 umfasst eine Stelleinheit 205, eine Stützeinheit 210, eine Auslöseeinheit 215 mit einer Kniehebeleinheit 220 und eine Fixiereinheit 225 mit einem Elektromagneten 230. Weiterhin umfasst die Sicherungseinheit 150 eine Antriebseinheit 235 mit einem Elektromotor 240, welcher ein Getriebe 245 antreibt, das selbst wiederum (beispielsweise mittels einer in der Figur 2 nicht erkennbaren Zahnstange) die Stützeinheit 210 in Bewegung versetzen kann. Weiterhin ist die Stelleinheit 205 mittels einer Feder 250 gegen die Stützeinheit 210 abgestützt, wobei ferner die Stelleinheit 205 mit einem Seilzug 255 als Übertragungselement 130 mit der (in der Figur 2 nicht dargestellten) Komponente 140 des Getriebes 110 verbunden ist, um eine gewünschte Funktionalität dieses Getriebes 110 sicherzustellen. Der Seilzug 255 ist hierbei in einer Seilzugaufnahme 260 aufgenommen, wie dies noch später näher beschrieben wird. Ferner ist in der Figur 2 eine Leiterplatte 265 als Teil der Sicherungseinheit 150 dargestellt, wobei diese Leiterplatte 265 beispielsweise Sensoren 270 aufweist, die auf der Rückseite der in Figur 2 dargestellten Leiterplatte 265 angeordnet sind und die ausgebildet sind, um eine Position des Stützelementes 210 in Bezug zur Leiterplatte 265 zu erfassen. Weiterhin ist ein Steuergerät 275 vorgesehen, welches beispielsweise ebenfalls auf der Leiterplatte 265 angeordnet ist und welches, wie es nachfolgend noch näher ausgeführt wird, entsprechende Einheiten aufweist, um ein nachfolgend ebenfalls noch näher beschriebenes Verfahren zur Einstellung einer vorbestimmten Position einer Komponente 140 des Getriebes 110 bzw. zum Betrieb der Sicherungseinheit 150 auszuführen. Schließlich umfasst die Sicherungseinheit 150 eine Notentriegelungseinrichtung 280, welche beispielsweise mit einem Aktivierungsseilzug 285 aktiviert werden kann und auf eine Achse 290 durch das Stellelement 205 und das Stützelement 210 drückt, um den Seilzug 255 bzw. das Übertragungselement 230 und hierdurch die Komponente 140 des Getriebes 110 im Notfall mechanisch oder manuell bewegen zu können.

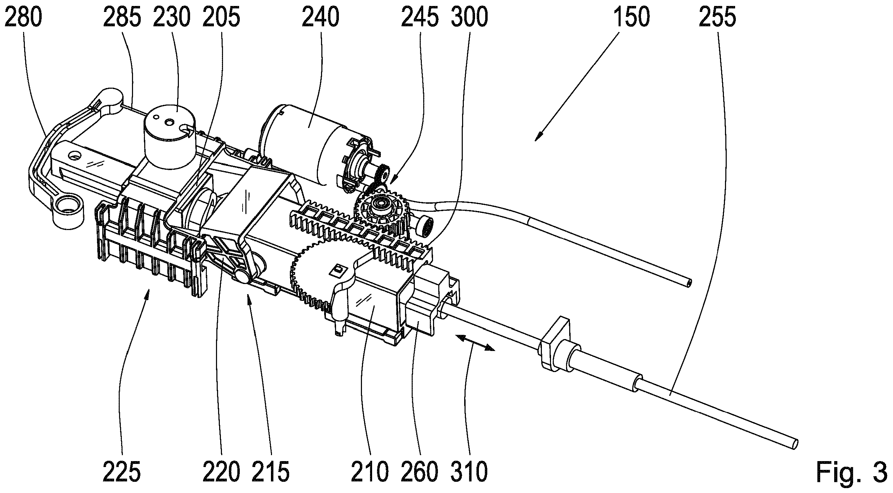

Figur 3 zeigt die Sicherungseinheit 150 gemäß einem Ausführungsbeispiel der vorliegenden Erfindung in perspektivischer Ansicht, nun ohne das Gehäuse 200 sowie die Leiterplatte 265 aus Figur 2. Erkennbar sind neben den bereits mit Bezug zur Figur 2 dargestellten Elemente zusätzlich die Zahnstange 300, die mit dem Getriebe 245 kämmt und eine lineare Bewegung des Stützelementes 210 in eine Bewegungsrichtung 310 ermöglicht. Weiterhin ist in der Darstellung gemäß Figur 3 die Kniehebeleinheit 220 besser ersichtlich, deren Funktion nachfolgend noch näher erläutert wird.

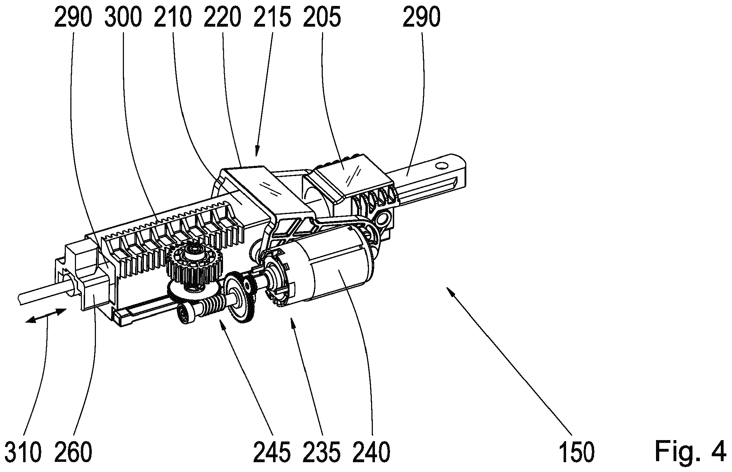

Figur 4 zeigt eine weitere perspektivische Ansicht der Sicherungseinheit 150, nun aus einer Ansicht auf die Antriebseinheit 235 im Vordergrund. Weiterhin ist die Fixiereinheit 225 aus Gründen der besseren Übersichtlichkeit nicht dargestellt. Erkennbar ist, dass, wenn der Elektromotor 240 in Betrieb gesetzt wird, eine Drehung über das Getriebe 245 in eine lineare Bewegung der Zahnstange 300 übertragen wird, welche mit dem Stützelement 210 starr verbunden ist, sodass das Stützelement 210 in die Bewegungsrichtung 310 bewegt werden kann, je nachdem in welche Richtung der Elektromotor 240 dreht.

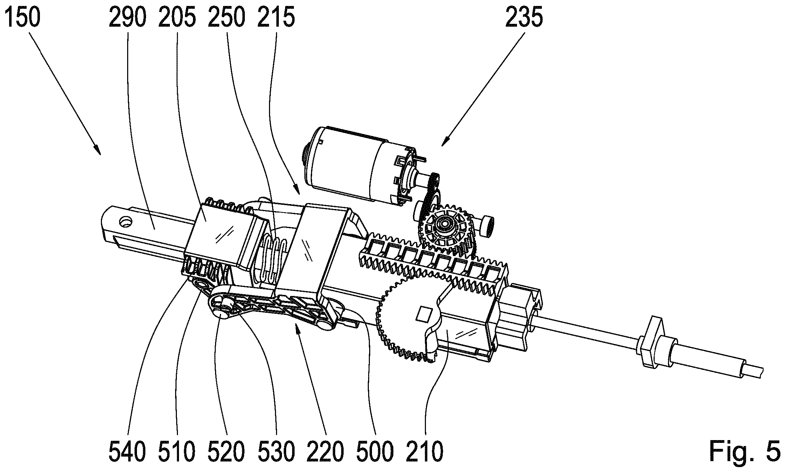

Figur 5 zeigt eine weitere perspektivische Ansicht auf die Sicherungseinheit 150, nun wieder aus einer Richtung, bei der sich die Antriebseinheit 235 im Hintergrund befindet. Erkennbar ist in der Figur 5 nun die Auslöseeinheit 215 mit der Kniehebeleinheit 220, wobei ein erster Hebel 500 der Kniehebeleinheit 220 beweglich mit der Stützeinheit 210 verbunden ist und ein zweiter Hebel 510 der Kniehebeleinheit 220 beweglich mit der Stelleinheit 205 verbunden. Der erste Hebel 500 und der zweiter Hebel 510 sind an einem Gelenk 520 der Kniehebeleinheit 220 beweglich miteinander verbunden. Weiterhin weist die Kniehebeleinheit 220 einem Zapfen 530 auf, welcher nach außen, also von der Stelleinheit 205 weg, gerichtet ist. Die Funktion dieses Zapfens 530 wird nachfolgend noch näher erläutert.

Wie aus der Figur 5 ferner erkennbar ist, umfasst die Auslöseeinheit 215 bzw. die Kniehebeleinheit 220 die Stützeinheit 210 als auch die Stelleinheit 205 klammerförmig. Speziell sind auf der Rückseite der Kniehebeleinheit 220 ebenfalls zwei gelenkig miteinander verbundene Hebel vorgesehen, die zwar in der Figur 5 von der Stützeinheit 210, der Stelleinheit 205, der Feder 250 und/oder der Achse 290 verdeckt sind, wobei jedoch ein Fachmann erkennen wird, dass die Anordnung dieser miteinander verbundenen Hebel der Anordnung und Verbindung des ersten Hebels 500 mit dem zweiten Hebel 510 sowie der jeweiligen Befestigungen an der Stützeinheit 210 und der Stelleinheit 205 entsprechen. Die Kniehebeleinheit 220 kann somit als zweiteilig aufgefasst werden, wobei ein erster Teil den in der Fig. 5 im Vordergrund dargestelten ersten Hebel 500 und zweiten Hebel 510 und der zweite Teil die im Hintergrund teilweise verdeckt angeordneten weiteren Hebel aufweist, die analog zu dem ersten und zweiten Hebel 500 bzw. 510 untereinander und mit der Stelleinheit 205 und der Stützeinheit verbunden sind.

Weiterhin ist aus der Figur 5 erkennbar, dass der zweiter Hebel 210 an einem Anschlagelement 540 der Stelleinheit 205 anliegt und durch dieses Anschlagelement 540 in einer bestimmten Position, hier der Freigabeposition, abgestützt wird.

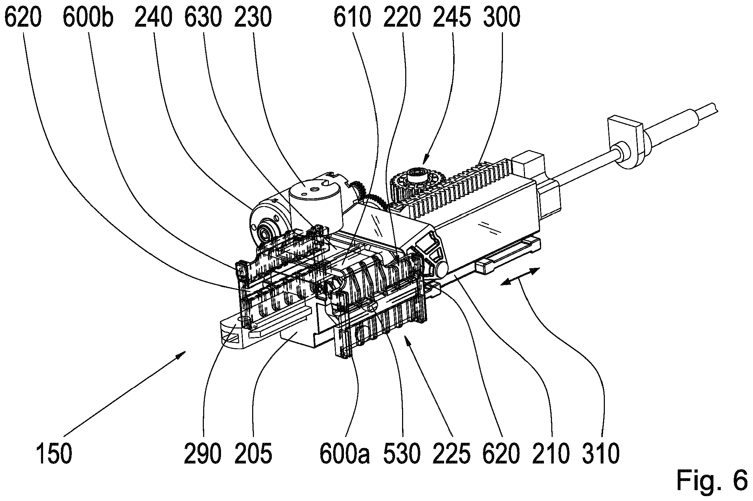

Fig. 6 zeigt eine perspektivische Ansicht eines Ausführungsbeispiels der Sicherungseinheit 150. Zusätzlich zu den bereits in dem vorausgegangenen Passagen erläuterten Elementen der Sicherungseinheit 150 ist nun in der Figur 6 die Fixiereinheit 225 näher dargestellt, wobei zur Erläuterung der Funktionalität der Sicherungseinheit 150 diese Fixiereinheit 225 teilweise transparent dargestellt ist. Speziell ist ersichtlich, dass die Fixiereinheit 225 zwei auf gegenüberliegenden Seiten der Stelleinheit 205 angeordnete Teilabschnitte 600a und 600b aufweist, die mittels eines Verbindungselements 610 miteinander verbunden sind. Auf diese Weise bilden die Teilabschnitte 600a und 600b der Fixiereinheit 225 zusammen mit dem Verbindungselement 610 ein U-förmiges oder klammerförmiges Element, welches die Stelleinheit 205 umgreift. In den Teilabschnitten 600a und 600b ist jeweils auf der Innenseite, d. h., zur Stelleinheit 205 oder zur Kniehebeleinheit 220 hin eine Nut 620 vorgesehen, in welcher der Zapfen 530 der Kniehebeleinheit 220 eingreift und in welcher der Zapfen 530 auch geführt wird, wenn sich die Kniehebeleinheit 220 relativ zur Fixiereinheit 225 bewegt.

Weiterhin ist an dem Verbindungselemente 610 eine ferromagnetische Aufnahmeplatte 630 vorgesehen, welche im direkten Wirkbereich des Elektromagneten 230 angeordnet ist, sodass bei einem Bestromen des Elektromagneten 230 diese Aufnahmeplatte 630 und somit das Verbindungselemente 610 angezogen wird, sodass die Fixiereinheit 225 von der Figur 6 dargestellten Freigabeposition in eine Fixierposition verbracht oder zumindest in dieser Fixierposition gehalten wird.

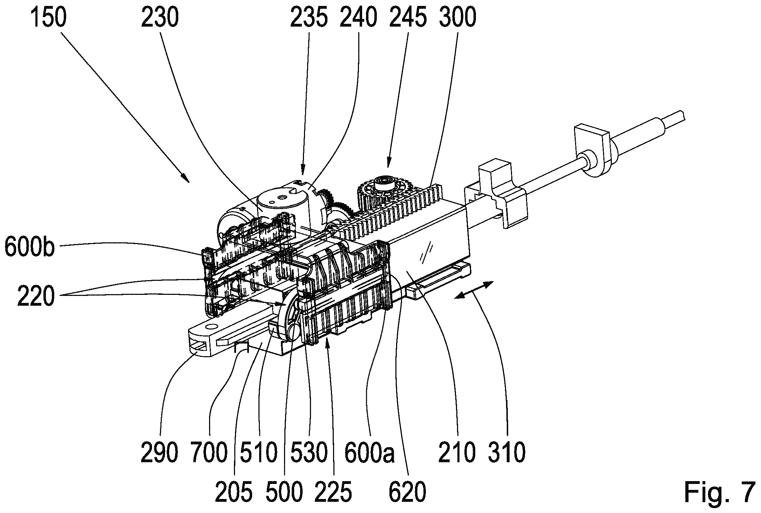

Nachfolgend soll nun die Funktion der Sicherheitseinheit 150 näher erläutert werden, wobei dies speziell anhand des Übergangs von der in der Figur 6 dargestellten Freigabeposition der Fixiereinheit 225 in eine Fixierposition gemäß der Darstellung aus Figur 7 und umgekehrt beschriebenen werden soll.

Figur 7 zeigt eine perspektivische Darstellung eines Ausführungsbeispiels der Sicherungseinheit 150, wobei nun die Fixiereinheit 225 in die Fixierposition gebracht wurde. Um diese Fixierposition zu erreichen, wurde zunächst, ausgehend von der in der Figur 6 dargestellten Lage der Elemente der Sicherungseinheit 150, durch den Elektromotor 240 der Antriebseinheit 235 das Getriebe 245 in Drehung versetzt, wodurch die Stützeinheit 210 mittels der Zahnstange 300 in die Bewegungsrichtung 310 bewegt wurde, insbesondere auf die Stelleinheit 205 zu bewegt wurde. Hierdurch wurde einerseits die in der Figur 7 nicht dargestellte Feder zwischen der Stelleinheit 205 und der Stützeinheit 210 gespannt, da die Stelleinheit 205 auf ein Anschlagelement 700 gedrückt wird, welches beispielsweise Teil des in Figur 7 nicht dargestellten Gehäuses 200 ist. Durch dieses Anschlagelement 700 wird somit verhindert, dass die Stelleinheit 205 einer Bewegung der Stützeinheit 210 auf die Stelleinheit 205 zu ausweicht, sodass sich anderenfalls die Feder nicht spannend könnte. Zugleich wird die Kniehebeleinheit 220 umgeklappt, wodurch nun der zweite Hebel 510 der Kniehebeleinheit 220 nicht mehr nach oben weist, sondern im Wesentlichen in die Bewegungsrichtung 310 ausgerichtet ist, in welche sich die Stelleinheit 205 und die Stützeinheit 210 relativ zueinander bewegen können. Durch eine solche Umklappbewegung der Kniehebeleinheit 220 wird auch der erste Hebel 500 in eine erhöhte Position gebracht, sodass auch der erste Hebel 500 im Wesentlichen in die Bewegungsrichtung 310 ausgerichtet ist. Dies führt dazu, dass der Zapfen 530, der am ersten Hebel 500 der Kniehebeleinheit 220 befestigt ist, ebenfalls angehoben wird und durch den Eingriff in die Nut 620, auch die beiden Teilabschnitte 600a und 600b in die Fixierposition der Fixiereinheit 225 anhebt. Wird nun der Elektromagnet 230 aktiviert, d. h., bestromt, wirkt auf die Aufnahmeplatte 630 eine elektromagnetische Kraft, die diese Fixierposition der Fixiereinheit 225 bzw. der Kniehebeleinheit 220 fixiert oder arrettiert.

Ist nun die Fixiereinheit 225 in der Fixierposition gemäß der Darstellung aus Figur 7 fixiert oder arrettiert, kann beispielsweise durch die Antriebseinheit 235 mit dem Elektromotor 240 und der Vermittlung des Getriebes 245 sowie der Zahnstange 300 die Stützeinheit 210 und die nun mit der Stützeinheit 210 fixierte Stelleinheit 205 in die Bewegungsrichtung 310 bewegt werden. Dies kann beispielsweise dadurch bedingt sein, dass ein Fahrer am Gangwahlschalter 120 eine Änderung der Gangwahl vornimmt, sodass durch einen elektronischen Sensor dieser Änderung der Gangwahl erfasst wird und der Elektromotor 240 entsprechend angesteuert wird, um die Änderung der Gangwahl durch das Übertragungselement 130 bzw. den Seilzug 255, der in der Figur 7 nicht mehr dargestellt ist, auf das Getriebe 110 zu übertragen.

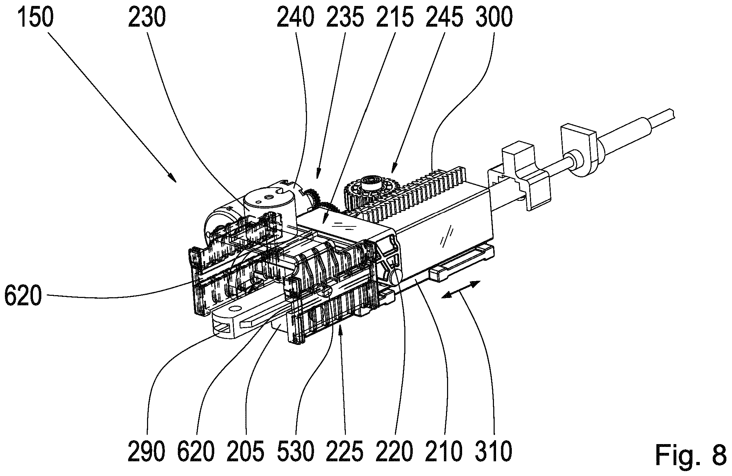

Figur 8 zeigt eine perspektivische Darstellung einer Sicherungseinheit 150 gemäß einem Ausführungsbeispiel des hier vorgestellten Ansatzes, wobei nun erkennbar ist, dass die mit der Stelleinheit 205 durch die in der Fixierposition fixierte Fixiereinheit 225 bzw. Auslöseeinheit 215 gekoppelte Stützeinheit 210 nun gegenüber der in der Figur 7 dargestellten Position ein Stück in die Bewegungsrichtung 310 nach rechts verschoben bzw. bewegt worden. Die Fixiereinheit 225 samt Elektromagnet 230 verbleibt in diesem Fall ortsfest in Bezug auf das in Figur 8 nicht dargestellte Gehäuse. Insofern kann durch das Gleiten des Zapfens 530 der Kniehebeleinheit 220 in der Nut 620 der Fixiereinheit 225 in der Fixierposition einerseits eine starre Kopplung zwischen der Stelleinheit 205 und der Stützeinheit 210 erreicht werden, zum anderen jedoch auch sichergestellt werden, dass eine Bewegung der Stützeinheit 210 bzw. noch wichtiger der Stelleinheit 205 in die Bewegungsrichtung 310 möglich ist, wobei die Stelleinheit 205 durch das Übertragungselement 130 bzw. den Seilzug 255 mit der entsprechenden Komponente 140 des Getriebes 110 gekoppelt ist. In dieser Fixierposition ist somit beispielsweise der Normalbetrieb der Sicherungseinehti 150 gewährleistet, in der eine Änderung der Gangwahl durch den Fahrer des Fahrzeugs 100 direkt durch die Aktivierung des Elektromotors 230 in einer Verschiebung oder Bewegung des Übertragnselementes 130 resultieren kann, wodurch dann eine Änderung des Getriebezustandes einfach erericht werden kann.

Wird nun beispielsweise das Fahrzeug in einem bestimmten Betriebszustand gebracht, bei der eine Komponente 140 des Getriebes 110 aus Sicherheitsgründen in einer vorbestimmten Position sein sollte, kann dies nun technisch sehr einfach durch die Sicherungseinheit 150 vorgenommen werden. Beispielsweise könnte in einem konkreten Fall der Fahrer das Fahrzeug 100 abstellen und vergessen, die Parksperre einzulegen, sodass das Fahrzeug 100 möglicherweise wegrollen könnte. Eine solche Sicherheitsfunktionen des automatischen Einlegens der Parksperre durch das Verbringen der entsprechenden Komponente 140 des Getriebes 110 in die vorbesteimmte Position kann durch die Sicherungseinheit 150 sehr einfach dadurch erfolgen, dass beispielsweise ein Stromfluss durch den Elektromagneten 230 unterbrochen wird. Hierdurch wird die Fixiereinheit 225, beispielsweise durch ihr Eigengewicht, nach unten gedrückt und durch die Vermittlung des in der Nut 620 laufenden Zapfens 530 den ersten Hebel 500 der Kniehebeleinheit 220 ebenfalls nach unten drückt. Hierdurch wird auch der zweite Hebel 510 der Kniehebeleinheit 220 nach unten gezogen, sodass die Kniehebeleinheit 220 selbst durch die Wirkung der Kraft der Feder umgeklappt und die Stelleinheit 205 von der Stützeinheit 210 weggedrückt wird, sodass nun wieder die in der Figur 6 dargestellte Freigabeposition der Fixiereinheit 225 bzw. Auslösereinheit 215 erreicht wird.

Nachdem das Getriebe 245 gemäß dem hier vorgestellten Ausführungsbeispiel vorzugsweise selbsthemmend ausgestaltet ist, bedeutet dies, dass die Stelleinheit 205 durch die Feder 250 möglichst weit nach links in den Figuren 7 und 6 gedrückt wird und somit beispielsweise auf das Anschlagelement 700 stößt. Dieses Anschlagelement 700 bildet dabei die Endposition der Stelleinheit 205, bei der das mit der Stelleinheit 205 verbundene Übertragungselement 130 bzw. der Seilzug 255 die Komponente 140 (hier beispielsweise die Parksperrklinke) des Getriebes 110 in die vorbestimmte Position bringt. Auf diese Weise kann nun mittels der Sicherungseinheit 150 sehr einfach durch die Unterbrechung des Stromflusses durch den Elektromagneten 230 sichergestellt werden, dass eine Komponente 140 des Getriebes 110 zuverlässig in eine vorbestimmte Position gebracht werden kann.

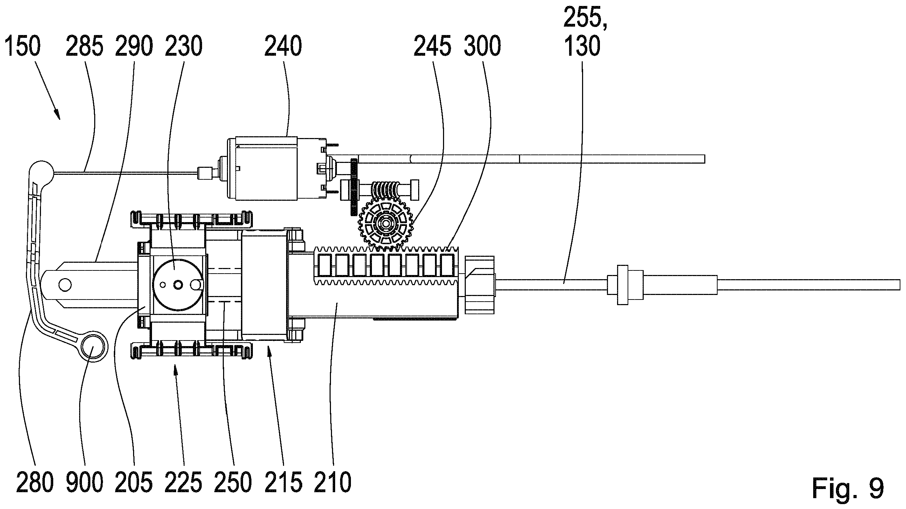

Figur 9 zeigt eine Draufsichtsdarstellung auf ein Ausführungsbeispiel des hier vorgestellten Ansatzes einer Sicherungseinheit 150. Hierbei ist in der Fig. 9 dargestellt, wie eine Notentriegelungseinheit 280 in der Form eines Hebels vorgesehen ist, der durch Aktivierungsseilzug 285 betätigbar ist. In diesem Fall wird durch einen Zug am Aktivierungsseilzug 285 der Hebel der Notentriegelungseinheit 280 um einen Drehpunkt 900in Drehung versetzt, sodass ein Vorsprung 910 der Notentriegelungseinheit 280 auf ein der Stützeinheit 210 in Bezug auf die Stelleinheit 205 gegenüberliegendes Ende der Achse 290 gedrückt wird. Hierdurch wird die Achse 290, an der das Übertragungselement 130 bzw. der Seilzug 255 zum Verbringen der Komponente 140 des Getriebes 110 in die vorbestimmte Position befestigt oder fixiert ist, gegen die

Federkraft der Feder 250 gedrückt, sodass die Komponente 140 des Getriebes 110, beispielsweise die Parksperre, wieder aus der vorbestimmten Position verbracht wird. Auf diese Weise kann beispielsweise die Parksperre wieder gelöst werden, wenn das Fahrzeug 100 von einem Pannendienst oder Reparaturdienst bewegt werden muss. Die Betätigung der Notentriegelungseinheit 280 kann dabei unabhängig davon erfolgen, ob sich die Fixiereinheit 225 oder die Auslöseeinheit 215 in der Fixierposition oder in der Freigabeposition befindet, da durch das Bewegen der Achse 290, die nicht durch die Fixiereinheit 225 oder die Auslöseeinheit 215 fixiert oder arretiert wird, die Bewegung des Übertragungselementes 130 in die Bewegungsrichtung 310 ermöglicht wird. Um sicherzustellen, dass diese Notentriegelungseinheit 280 beispielsweise nicht unbeabsichtigt ausgelöst wird, kann beispielsweise vorgesehen sein, den Aktivierungsseilzug 285 mit einem Spezialwerkzeug oder nur von einer verdeckten Stelle im Fahrzeug 100 betätigt werden kann.

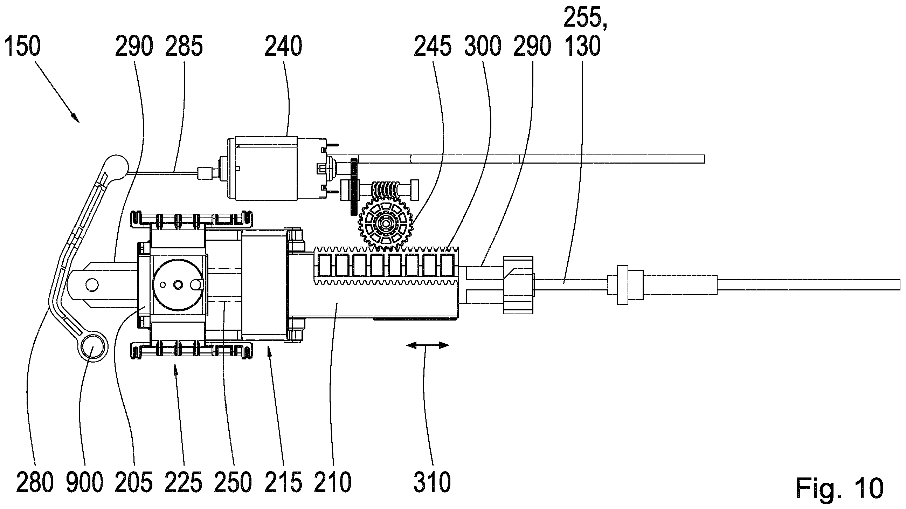

Figur 10 zeigt eine Draufsichtsdarstellung auf einem Ausführungsbeispiel des hier vorgestellten Ansatzes einer Sicherungseinheit 150, bei der die Notentriegelungseinheit 280 aktiviert ist, sodass die Achse 290 entlang der Bewegungsrichtung 310, hier nach rechts, verschoben wurde und somit unter Vermittlung des Übertragungselements 130 die Position der Komponente 140 des Getriebes 110 verändert werden kann.

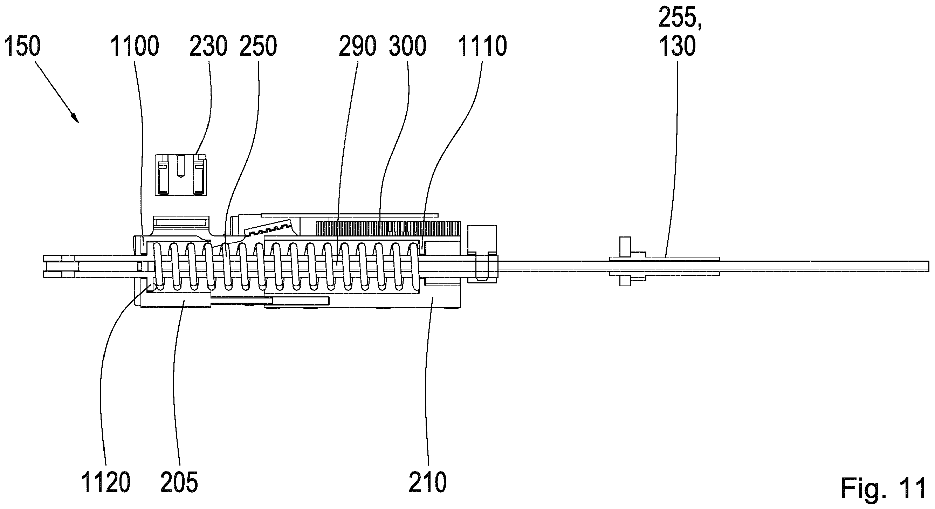

Figur 11 zeigt eine Querschnittsdarstellung durch eine Sicherungseinheit 150 gemäß einem Ausführungsbeispiel des hier vorgeschlagenen Ansatzes im nicht gespannten Zustand. Hierbei ist erkennbar, dass wohl das Stellelement 205 als auch das Stützelement 210 röhrenförmig ausgestaltet und teilweise ineinander geschoben sind, wobei sowohl das Stellelement 205 einen Innenanschlag 1100 als auch das Stützelement 210 einen Innenanschlag 1110 aufweisen, die zur Abstützung der Feder 250 dienen. Ferner wird auch ersichtlich, dass die Achse 290 sowohl durch das Stellelement 205 als auch das Stützelement 210 hindurch reicht und mit dem Übertragungselement 130 bzw. dem Seilzug 255 zur Bewegung der Komponente 140 des Getriebes 110 gekoppelt oder fixiert ist. In Bezug auf den Innenanschlag 1100 im Bereich des Stellelements 205 ist ferner erkennbar, dass die Feder 250 auf einem Flansch 1120 der Achse 290 wirkt und diesen Flansch 1120 dann auf den Innenanschlag 1100 der Stelleinheit 205 drückt. Hierdurch kann ferner sichergestellt werden, dass nach einem Betätigen bzw. Rücktellen der Notentriegelungseinheit 280 die Achse 290 durch die Feder 250 wieder in die Ausgangslage zurückgeschoben wird, sodass mit technisch einfachen Mitteln zuverlässig eine Fehlfunktion oder irreversible Beschädigung der Sicherungseinheit 150 vermieden werden kann.

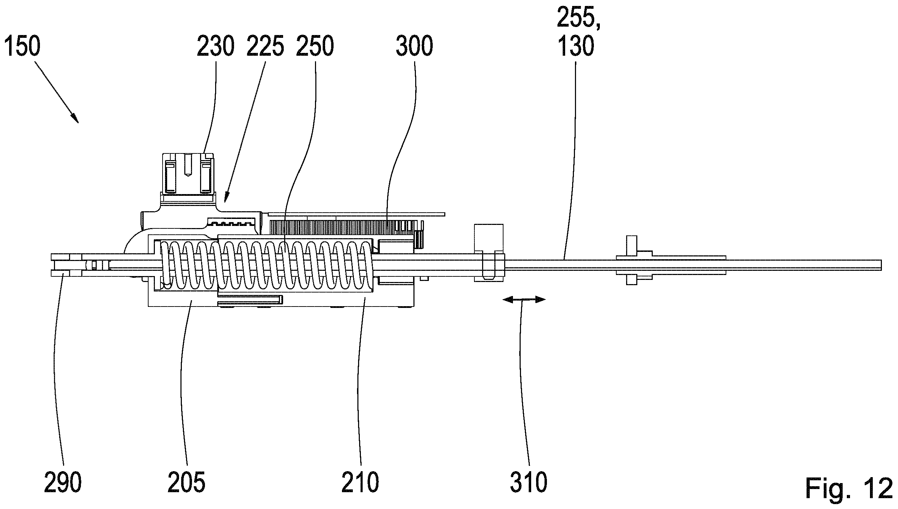

Figur 12 zeigt eine Querschnittsdarstellung durch eine Sicherungseinheit 150 gemäß einem Ausführungsbeispiel des hier vorgeschlagenen Ansatzes im gespannten Zustand. Hierbei ist erkennbar, dass die Fixiereinheit 225 sich in der Fixierposition befindet und die Feder 250 gespannt ist. Die Stelleinheit 205 ist in diesem Zustand mit der Stützeinheit 210 gekoppelt bzw. fixiert, sodass bei einer Bewegung der Stützeinheit 210 über die Zahnstange 300 eine direkte Übertragung dieser Bewegung entlang der Bewegungsrichtung 310 auf das Übertragungselement 130 bzw. dem Seilzug 255 möglich wird, wodurch selbst wiederum eine Veränderung der Lage oder Position der Komponente 140 des Getriebes 110 ermöglicht wird.

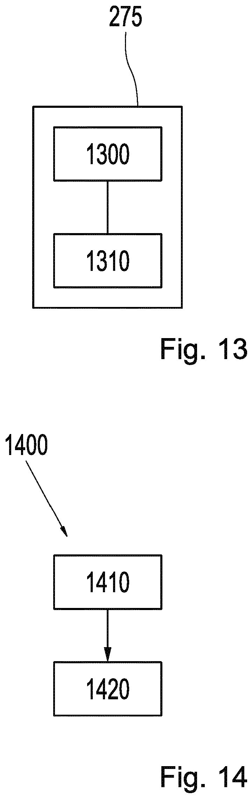

Der hier vorgestellte Ansatz ermöglicht hierbei gemäß einem Ausführungsbeispiel vorteilhaft durch die Verwendung von mit Kniehebeln verbundenen Schiebern in der Form der Stelleinheit 205 und der Stützeinheit 210, die mit einer Feder 250 vorgespannt sind und von einem Haftmagneten bzw. Elektromagneten 230 gehalten werden, einen sich eventuell außerhalb von der Position "P" (Parken) bei einem Automatikgetriebe befindlichen Seilzug als Übertragungselement 130 sicher in die Position "P" einzulegen und somit eine Komponente 140 des Getriebes 110 in eine vorbestimmte Position zu verbringen. Des Weiteren kann das Schiebersystem mit den Einheiten 205 und 210 durch die in ihrem Bewegungsfreiraum eingeschränkten (Knie-) Hebel 500 bzw. 510 weiter in einen Bereich verschoben werden, dass die elektrische Notfunktion darstellt. Bei der manuellen Notfunktion kann die Seilzugaufnahme und somit der am Getriebe eingehängte Seilzug, gegen die Federkraft des Systems in die Position "nicht P" verschoben werden. Das ganze System ist ausgelegt um beispielsweise ein automatisches Getriebe 110 mit Seilzugbetätigung Shiftby-wire-fähig zu machen. Figur 13 zeigt ein Blockschaltbild eines Steuergeräts 275 zum Ansteuern eines Verfahrens zum Betrieb einer Sicherungseinheit 150 gemäß einer hier vorgestellten Variante. Das Steuergerät 275 umfasst eine Einheit 1300 zum Bewegen des Stützelementes und des Stellelementes aufeinander zu und eine Einheit 1310 zum Verbringen oder Halten der Fixiereinheit in die Fixierposition durch Bestromen des Elektromagneten. Die Einheiten 1300 und 1310 können hierbei auch schaltungstechnisch oder software-technisch ausgestaltete Module sein, die ausgebildet sind, um eine entsprechende Ansteuerung von Elementen der Sicherungseinheit 150 vorzunehmen, damit die genannten Funktionen ausgeführt werden.

Figur 14 zeigt ein Ablaufdiagramm eines Verfahrens 1400 zum Betrieb einer Sicherungseinheit gemäß einer hier vorgestellten Variante. Das Verfahren 1400 umfasst einen Schritt 1410 des Bewegens des Stützelementes und des Stellelementes aufeinander zu und einen Schritt 1420 des Verbringens oder Haltens der Fixiereinheit in der Fixierposition durch Bestromen des Elektromagneten. Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 110: Getriebe
- 120: Getriebewahlschalter
- 125: Fahrgastraum
- 130: Seilzug, Übertragugnselement
- 140: Komponente des Getriebes 110
- 150: Sicherungseinheit

- 200: Gehäuse
- 205: Stelleinheit
- 210: Stützeinheit
- 215: Auslöseeinheit
- 220: Kniehebeleinheit
- 225: Fixiereinheit
- 230: Elektromagnet
- 235: Antriebseinheit
- 240: Elektromotor
- 245: Getriebe
- 250: Feder
- 255: Seilzug
- 260: Seilzugaufnahme
- 265: Leiterplatte
- 270: Sensoren
- 275: Steuergerät
- 280: Notentriegelungseinrichtung
- 285: Aktivierungsseilzug
- 290: Achse

- 300: Zahnstange
- 310: Bewegungsrichtung
- 500: erster Hebel
- 510: zweiter Hebel
- 530: Zapfen
- 540: Anschlagelement

- 600a, 600b: Teilabschnitte der Fixiereinheit
- 610: Verbindungselement
- 620: Nut
- 630: Aufnahmeplatte
- 700: Anschlagelement

- 900: Drehpunkt
- 910: Vorsprung

- 1100: Innenanschlag
- 1110: Innenanschlag
- 1120: Flansch

- 1300: Einheit zum Bewegen des Stützelementes und des Stellelementes aufeinander zu
- 1310: Einheit zum Verbringen oder Halten der Fixiereinheit in der Fixierposition

- 1400: Verfahren zum Betrieb einer Sicherungseinheit
- 1410: Schritt des Bewegens des Stützelementes und des Stellelementes aufeinander zu
- 1420: Schritt des Verbringens oder Haltens der Fixiereinheit in der Fixierposition

## Patentansprüche

1. Sicherungseinheit (150) zur Einstellung einer vorbestimmten Position einer Komponente (140) eines Getriebes (110), wobei die Sicherungseinheit (150) die folgenden Merkmale aufweist:
- eine Stelleinheit (205), die mit einem Übertragungselement (130, 255) zur Einstellung der vorbestimmten Position der Komponente (140) des Getriebes (110) gekoppelt oder koppelbar ist;
- eine Stützeinheit (210), die in eine Bewegungsrichtung (310) beweglich zur Stelleinheit (205) anordenbar oder angeordnet ist und mit der Stelleinheit (205) über eine Feder (250) verbunden ist; **gekennzeichnet durch**:
- eine Auslöseeinheit (215) mit einer Kniehebeleinheit (220), wobei die Kniehebeleinheit (220) zwischen die Stelleinheit (205) und die Stützeinheit (210) gekoppelt ist;
und
- eine Fixiereinheit (225) mit einem Elektromagneten (230), wobei die Fixiereinheit (225) ausgebildet ist, um die Kniehebeleinheit (220) in einem bestromten Zustand des Elektromagneten (230) in einer Fixierposition zu halten und hierdurch die Stelleinheit (205) in Bezug zur Stützeinheit (210) zu fixieren und wobei die Fixiereinheit (225) ferner ausgebildet ist, um die Kniehebeleinheit (220) in einem unbestromten Zustand des Elektromagneten (230) zur Bewegung in eine Freigabeposition freizugeben, um und hierdurch das Verbringen der Komponente (140) des Getriebes (110) in die vorbestimmte Position freizugeben.

2. Sicherungseinheit (150) gemäß Anspruch 1, **dadurch gekennzeichnet, dass** die Kniehebeleinheit (220) zumindest ein Hebelelement (500, 510) aufweist, das in der Fixierposition in eine Richtung ausgerichtet ist, die im Wesentlichen der Bewegungsrichtung (310) zwischen der Stützeinheit (210) und der Stelleinheit (205) entspricht.

3. Sicherungseinheit (150) gemäß einem der vorangegangenen Ansprüche, **dadurch gekennzeichnet, dass** die Kniehebeleinheit (220) in der Fixierposition und/oder der Freigabeposition an einem Anschlagelement (540) der Stelleinheit (205) anliegt.

4. Sicherheitseinheit gemäß einem der vorangegangenen Ansprüche, **dadurch gekennzeichnet, dass** die Fixiereinheit (225) ausgebildet ist, um in der Freigabeposition eine Bewegung der Stelleinheit (205) relativ zur Stützeinheit (210) freizugeben.

5. Sicherungseinheit (150) gemäß einem der vorangegangenen Ansprüche, **dadurch gekennzeichnet, dass** die Kniehebeleinheit (220) und/oder die Fixiereinheit (225) die Stelleinheit (205) klammerförmig oder U-förmig umgibt oder umgreift.

6. Sicherungseinheit (150) gemäß einem der vorangegangenen Ansprüche, **dadurch gekennzeichnet, dass** die Fixiereinheit (225) ausgebildet ist, um zum Erreichen der Fixierposition im Wesentlichen senkrecht zu der Bewegungsrichtung (310) zwischen der Stelleinheit (205) und der Stützeinheit (210) bewegt zu werden.

7. Sicherungseinheit (150) gemäß einem der vorangegangenen Ansprüche, **dadurch gekennzeichnet, dass** der Elektromagnet (230) der Fixiereinheit (225) ausgebildet ist, um auf eine magnetische Kraft auf eine Aufnahmeplatte (630) auszuüben, die an einem Verbindungselement (610) angeordnet ist, welches zwei gegenüberliegende Seiten der Stelleinheit (205) verbindende Teilabschnitte (600a, 600b) der Fixiereinheit (225) verbindet.

8. Sicherungseinheit (150) gemäß einem der vorangegangenen Ansprüche, **dadurch gekennzeichnet, dass** die Fixiereinheit (225) zumindest eine Nut (620) aufweist, in die ein Zapfen (530) der Kniehebeleinheit (220) hineinragt.

9. Sicherungseinheit (150) gemäß einem der vorangegangenen Ansprüche, **gekennzeichnet durch** ein der Stützeinheit (210) in Bezug auf die Stelleinheit (205) gegenüberliegendes Anschlagelement (700), an dem die Stelleinheit (205) abgestützt ist, wenn die Komponente (140) des Getriebes (110) sich in der vorbestimmten Position befindet.

10. Sicherungseinheit (150) gemäß einem der vorangegangenen Ansprüche, **gekennzeichnet durch** eine Antriebseinheit (235), die ausgebildet ist, um die Stützeinheit (210) in die Bewegungsrichtung (310) zu bewegen, insbesondere wobei die Antriebseinheit (235) ausgebildet ist, um die Stützeinheit (210) linear zu bewegen.

11. Sicherungseinheit (150) gemäß einem der vorangeganenen Ansprüche, **gekennzeichnet durch** eine Notentriegelungseinheit (280), die ausgebildet ist, um eine durch die Stelleinheit (205) und die Stützeinheit (210) hindurchragende Achse (290) in die Bewegungsrichtung (310) zu bewegen, wobei die Achse (290) an dem Übertragungselement (130, 255) fixiert ist, insbesondere wobei die Notentriegelungseinheit (280) eine Seilzugeinheit (285) und/oder als Hebeleinheit ausgebildet ist, die auf einer der Stützeinheit (210) in Bezug auf die Stelleinheit (205) gegenüberliegenden Seite angeordnet ist.

## Claims

1. Securing unit (150) for setting a predetermined position of a component (140) of a transmission (110), wherein the securing unit (150) has the following features:
- an adjusting unit (205), which is coupled or can be coupled to a transmission element (130, 255) for setting the predetermined position of the component (140) of the transmission (110);
- a supporting unit (210), which can be arranged or is arranged such that it can move relative to the adjusting unit (205) in a movement direction (310) and is connected to the adjusting unit (205) via a spring (250); **characterized by**:
- a tripping unit (215) with a toggle lever unit (220), wherein the toggle lever unit (220) is coupled between the adjusting unit (205) and the supporting unit (210);
and
- a fixing unit (225) with an electromagnet (230), wherein the fixing unit (225) is designed to keep the toggle lever unit (220) in a fixing position in an electrically energized state of the electromagnet (230), and in this way to fix the adjusting unit (205) with respect to the supporting unit (210) and wherein the fixing unit (225) is also designed to release the toggle lever unit (220) for the purpose of movement into a release position in a non-electrically energized state of the electromagnet (230), in order and in this way to enable the passage of the component (140) of the transmission (110) into the predetermined position.

2. Securing unit (150) according to Claim 1, **characterized in that** the toggle lever unit (220) has at least one lever element (500, 510), which in the fixing position is aligned in a direction which corresponds substantially to the movement direction (310) between the supporting unit (210) and the adjusting unit (205).

3. Securing unit (150) according to either of the preceding claims, **characterized in that** the toggle lever unit (220) bears against a stop element (540) of the adjusting unit (205) in the fixing position and/or the release position.

4. Securing unit according to one of the preceding claims, **characterized in that** the fixing unit (225) is designed to enable a movement of the adjusting unit (205) relative to the supporting unit (210) in the release position.

5. Securing unit (150) according to one of the preceding claims, **characterized in that** the toggle lever unit (220) and/or the fixing unit (225) surround(s) or encompass (es) the adjusting unit (205) in the shape of a parenthesis or in a U shape.

6. Securing unit (150) according to one of the preceding claims, **characterized in that** the fixing unit (225) is designed to be moved substantially perpendicularly to the movement direction (310) between the adjusting unit (205) and the supporting unit (210) in order to reach the fixing position.

7. Securing unit (150) according to one of the preceding claims, **characterized in that** the electromagnet (230) of the fixing unit (225) is designed to exert a magnetic force on a receiving plate (630), which is arranged on a connecting element (610) which connects two partial portions (600a, 600b) of the fixing unit (225) that connect opposite sides of the adjusting unit (205).

8. Securing unit (150) according to one of the preceding claims, **characterized in that** the fixing unit (225) has at least one groove (620), into which a journal (530) of the toggle lever unit (220) protrudes.

9. Securing unit (150) according to one of the preceding claims, **characterized by** a stop element (700), which is situated opposite the supporting unit (210) with respect to the adjusting unit (205) and on which the adjusting unit (205) is supported when the component (140) of the transmission (110) is located in the predetermined position.

10. Securing unit (150) according to one of the preceding claims, **characterized by** a drive unit (235), which is designed to move the supporting unit (210) in the movement direction (310), in particular wherein the drive unit (235) is designed to move the supporting unit (210) linearly.

11. Securing unit (150) according to one of the preceding claims, **characterized by** an emergency unlocking unit (280), which is designed to move a shaft (290), which projects through the adjusting unit (205) and the supporting unit (210), in the movement direction (310), wherein the shaft (290) is fixed on the transmission element (130, 255), in particular wherein the emergency unlocking unit (280) is designed as a cable unit (285) and/or as a lever unit which is arranged on a side situated opposite the supporting unit (210) with respect to the adjusting unit (205).

## Revendications

1. Unité de blocage (150) permettant de régler une position prédéfinie d'un composant (140) d'une transmission (110), l'unité de blocage (150) présentant les caractéristiques suivantes :
- une unité de réglage (205) qui est accouplée ou peut être accouplée à un élément de transmission (130, 255) pour le réglage de la position prédéfinie du composant (140) de la transmission (110) ;
- une unité de support (210) qui peut être disposée ou est disposée de manière mobile par rapport à l'unité de réglage (205) dans une direction de déplacement (310) et est reliée à l'unité de réglage (205) par le biais d'un ressort (250) ; **caractérisée par** :
- une unité de déclenchement (215) dotée d'une unité à levier coudé (220), l'unité à levier coudé (220) étant accouplée entre l'unité de réglage (205) et l'unité de support (210) ; et
- une unité de fixation (225) dotée d'un électroaimant (230), l'unité de fixation (225) étant réalisée pour maintenir l'unité à levier coudé (220) dans une position de fixation dans un état alimenté en courant de l'électroaimant (230) et pour ainsi fixer l'unité de réglage (205) par rapport à l'unité de support (210), et l'unité de fixation (225) étant en outre réalisée pour libérer l'unité à levier coudé (220) pour le déplacement dans une position de libération dans un état non alimenté en courant de l'électroaimant (230), afin d'autoriser ainsi le passage du composant (140) de la transmission (110) à la position prédéfinie.

2. Unité de blocage (150) selon la revendication 1, **caractérisée en ce que** l'unité à levier coudé (220) comprend au moins un élément levier (500, 510) qui, dans la position de fixation, est orienté dans une direction qui correspond sensiblement à la direction de déplacement (310) entre l'unité de support (210) et l'unité de réglage (205).

3. Unité de blocage (150) selon l'une des revendications précédentes, **caractérisée en ce que** l'unité à levier coudé (220), dans la position de fixation et/ou la position de libération, s'appuie contre un élément de butée (540) de l'unité de réglage (205).

4. Unité de blocage selon l'une des revendications précédentes, **caractérisée en ce que** l'unité de fixation (225) est réalisée pour, dans la position de libération, autoriser un déplacement de l'unité de réglage (205) relativement à l'unité de support (210).

5. Unité de blocage (150) selon l'une des revendications précédentes, **caractérisée en ce que** l'unité à levier coudé (220) et/ou l'unité de fixation (225) entourent ou enveloppent en forme de pince ou en forme de U l'unité de réglage (205).

6. Unité de blocage (150) selon l'une des revendications précédentes, **caractérisée en ce que** l'unité de fixation (225) est réalisée pour être déplacée sensiblement perpendiculairement à la direction de déplacement (310) entre l'unité de réglage (205) et l'unité de support (210) pour atteindre la position de fixation.

7. Unité de blocage (150) selon l'une des revendications précédentes, **caractérisée en ce que** l'électroaimant (230) de l'unité de fixation (225) est réalisé pour exercer une force magnétique sur une plaque de réception (630) qui est disposée sur un élément de liaison (610), lequel relie deux sections partielles (600a, 600b) de l'unité de fixation (225) qui relient deux côtés opposés de l'unité de réglage (205).

8. Unité de blocage (150) selon l'une des revendications précédentes, **caractérisée en ce que** l'unité de fixation (225) comprend au moins une rainure (620) dans laquelle pénètre une goupille (530) de l'unité à levier coudé (220).

9. Unité de blocage (150) selon l'une des revendications précédentes, **caractérisée par** un élément de butée (700) opposé à l'unité de support (210) par rapport à l'unité de réglage (205), élément de butée sur lequel l'unité de réglage (205) est supportée lorsque le composant (140) de la transmission (110) se trouve dans la position prédéfinie.

10. Unité de blocage (150) selon l'une des revendications précédentes, **caractérisée par** une unité d'entraînement (235) qui est réalisée pour déplacer l'unité de support (210) dans la direction de déplacement (310), en particulier l'unité d'entraînement (235) étant réalisée pour déplacer linéairement l'unité de support (210) .

11. Unité de blocage (150) selon l'une des revendications précédentes, **caractérisée par** une unité de déverrouillage d'urgence (280) qui est réalisée pour déplacer dans la direction de déplacement (310) un axe (290) traversant l'unité de réglage (205) et l'unité de support (210), l'axe (290) étant fixé à l'élément de transmission (130, 255), en particulier l'unité de déverrouillage d'urgence (280) étant réalisée sous forme d'unité à câble Bowden (285) et/ou sous forme d'unité à levier qui est disposée sur un côté opposé à l'unité de support (210) par rapport à l'unité de réglage (205).
